# EUROPEAN PATENT APPLICATION

(11) **EP 2 061 033 A1**
(43) Date of publication of application: **20.05.2009**
(21) Application number: 08159907.8
(22) Date of filing: 08.07.2008
(51) Int. Cl.: G11B 27/034

(54) **Method for editing digital moving picture files in set-top box**

(30) Priority: 14.11.2007 KR 20070115958
(71) Applicant: Handan Broadinfocom Co., Ltd., Seoul 135-080 (KR)
(72) Inventor: Ham, Young Jun, Seoul (KR)
(74) Representative: TBK-Patent

(57) **Abstract**

Provided is a method for editing digital moving picture files in a set-top box. The set-top box receives a digital moving picture file from a contents server, splits it into predetermined data units, and stores it in database. To edit the file, the set-top box selects a specific region of the file stored in the database, and generates a new file having only region information (start address and end address) of the selected specific region in the file. When the generated new file is accessed, in the case of copy, only a region corresponding to the region information is copied, and, in the case of paste and deletion, the region information is not accessed according to information recorded in the file header of the new file. The edit using address information (file ID) on an editing region in the original file can reduce an editing time.

## Description

### BACKGROUND OF THE INVENTION

### Field of the Invention

The present invention relates to a method for editing digital moving picture files in a set-top box, and more particularly, to a method for editing digital moving picture without using a space of a hard disk in a set-top box.

### Description of the Related Art

A set-top box is a communication terminal used to receive cable broadcasting signals, terrestrial broadcasting signals or satellite broadcasting signals at home. The set-top box converts a received signal into a signal suitable for a display device such as a liquid crystal display (LCD) or a TV set and displays an image corresponding to the signal.

The set-top box provides a file editing function in addition to functions of receiving broadcasting signals and displaying moving pictures on a display device. That is, the set-top box provides a personal video recorder (PVR) function capable of editing files. A PVR is distinguished from an analog recorder because the PVR stores and plays digital programs.

A conventional set-top box having the PVR function (referred to as PVR STB hereinafter) includes a memory (HDD) that stores a broadcasting signal received through a communication terminal in real time. Here, most data stored in the memory in real time is not processed, and thus the data may include portions that a user does not want and portions that the user wants to store as files. An editing method of the conventional PVR STB generates a new file through HDD copy in the case of copy such that the new file has a specific HDD region. Accordingly, files are independently managed. The independent file management is a very inefficient method in terms of time and HDD capacity although it has the advantage of removal of mutual interference between files. This is because that HDD copy requires a very long time and available HDD capacity is reduced by a copied portion. For example, if a movie (4Mbps, two-hour running time) requires an HDD space corresponding to about 3.6GB and the quantity of the movie corresponding to one hour is copied, an HDD space for storing 1.8GB data is needed and a very long copy time is required although the copy time depends on the performance of PVR STB.

As described above, the conventional picture file editing method respectively allocates HDD capacities to data signals even though the data signals are identical to each other and requires a considerably long time for the allocation.

### SUMMARY OF THE INVENTION

Accordingly, the present invention has been made to solve the above-mentioned problems occurring in the conventional art, and a primary object of the present invention is to provide a method for editing digital moving picture files without using a space of a hard disk in a set-top box.

Another object of the present invention is to provide a method for editing digital moving picture files in a set-top box, which is able to edit a file using address information (file ID) on an editing region in the file to reduce an editing time.

Yet another object of the present invention is to provide a method for editing digital moving picture files in a set-top box, which is able to copy files using a data sharing method without using HDD copy to prevent loss of HDD capacity and remarkably reduce a time required for copy.

To accomplish the objects of the present invention, there is provided a method for editing digital moving picture files in a set-top box, comprising the steps of: (a) splitting a digital moving picture file received from a contents server into predetermined data units in the set-top box and storing the digital moving picture file in a database; (b) selecting a specific region of the file stored in the database in order to edit the file; (c) generating a new file having only region information (start address and end address) of the specific region selected from the file in the file; and (d) when the generated new file is accessed, only a region corresponding to the region information is copied in the case of copy and the region information is not accessed according to information recorded in a file header in the case of paste and deletion.

When the new file is accessed according to a copy instruction in the step (d), the specific region may be recognized with the start address of the specific region and only the selected specific region may be copied.

When the new file is accessed according to a paste instruction in the step (d), the specific region may be recognized with the start address of the specific region and only the specific region may be pasted.

When the new file is accessed according to a deleting instruction in the step (d), the specific region may be recognized with the start address of the specific region and only the specific region may be deleted.

The method for editing digital moving picture files may record a next access point in the file header such that the pasted region or deleted region is not accessed.

According to the present invention, a moving picture file can be edited without using a space of a hard disk, and thus HDD capacity and a time required to edit the moving picture file can be optimized.

Furthermore, the original file can be edited using address information (file ID) on an editing region in the original file so as to reduce a time required to edit the file. In addition, a file is copied using a data sharing method without using HDD copy to prevent loss of HDD capacity and remarkably reduce a time required to copy the file.

Moreover, HDD capacity can be managed very efficiently because the capacity of an HDD is barely consumed.

Furthermore, the present invention provides a file editing method that optimizes HDD capacity and an editing time. This file editing method considerably reduces an editing time and barely consumes HDD capacity for the same data, and thus HDD consumption can be removed according to edition to manage HDD capacity very efficiently.

### BRIEF DESCRIPTION OF THE DRAWINGS

Further objects and advantages of the invention can be more fully understood from the following detailed description taken in conjunction with the accompanying drawings, in which:
FIG. 1 is a block diagram of a conventional contents providing system for explaining the present invention;
FIG. 2 is a block diagram of a set-top box used to edit digital moving picture files according to an embodiment of the present invention;
FIG. 3 is a flow chart of a method for editing digital moving picture files in a set-top box according to an embodiment of the present invention;
FIG. 4 is a diagram for explaining a data editing method used in the present invention; and
FIG. 5 represents file allocation tables used in the present invention.

### DETAILED DESCRIPTION OF EXEMPLARY EMBODIMENTS OF THE INVENTION

Preferred embodiments of the present invention will be explained in detail with reference to the attached drawings.

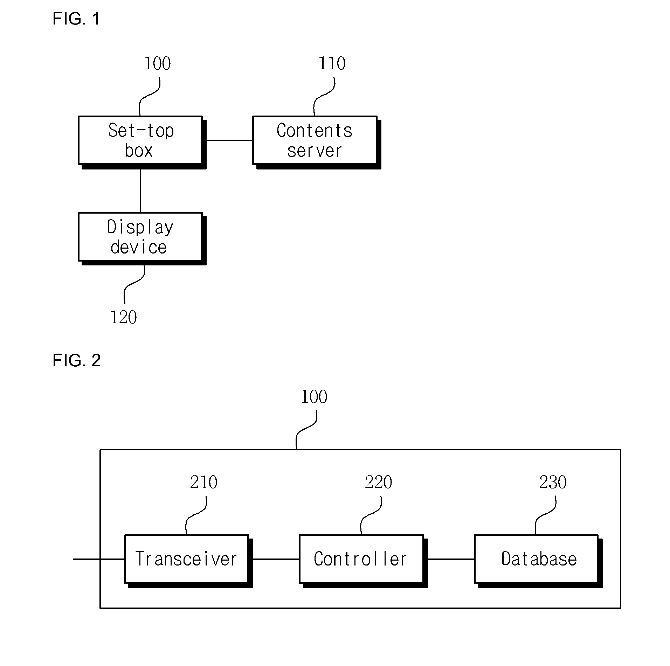

FIG. 1 is a block diagram of a conventional contents providing system for explaining the present invention. Referring to FIG. 1, the contents providing system includes a set-top box 100, a contents server 110 and a display device 120.

The display device 120 visually displays digital moving pictures and includes an LCD monitor and a TV monitor.

The contents server 110 stores digital moving picture data and transmits digital moving pictures such as broadcasting pictures and movie pictures to the set-top box 100.

The set-top box 100 receives digital moving picture data from the contents server 110 and transmits the received digital moving picture data to the display device 120 such that a user can visually recognize the digital moving picture data. The set-top box 100 stores the digital moving picture data received from the contents server 110 and provides an editing function by which the user can delete, copy and paste a specific portion of the stored data.

When data corresponding to a specific region of a moving picture data file stored in the set-top box is copied to another file, for example, a copy file having address information of the specific region is generated. This is discriminated from a conventional editing method that stores data in a new storage space such as a hard disk and generates a copy file when the data is copied.

When the copy file including the address information of the specific region of the moving picture data file is generated, the file header of the generated copy file includes address information of the copied region and the unique ID of the original file that is copied. The unique ID is an identifier for identifying the original file of the current file. This prevents data from being deleted according to a data deletion instruction for one of the original file and the copy file such that the data can be accessed or reproduced in the other file.

FIG. 2 is a block diagram of a set-top box 100 used to edit digital moving picture files according to an embodiment of the present invention. Referring to FIG. 2, the set-top box 100 includes a transceiver 210, a controller 220 and a database 230.

The transceiver 210 has an interface for transmitting/receiving data to/from the contents server 110 and the display device 120. The database 230 stores digital moving picture data received from the contents server 110. The database 230 has a storage unit such as a hard disk.

The controller 220 stores digital moving picture data received through the transceiver 210 in the database 230 and transmits the stored digital moving picture data to the display device 120 through the transceiver 210 such that a user can visually recognize a moving picture corresponding to the moving picture data. Furthermore, the controller 220 receives a moving picture data editing instruction from the user and edits digital moving picture data stored in the database 230.

A file editing method according to the present invention is described.

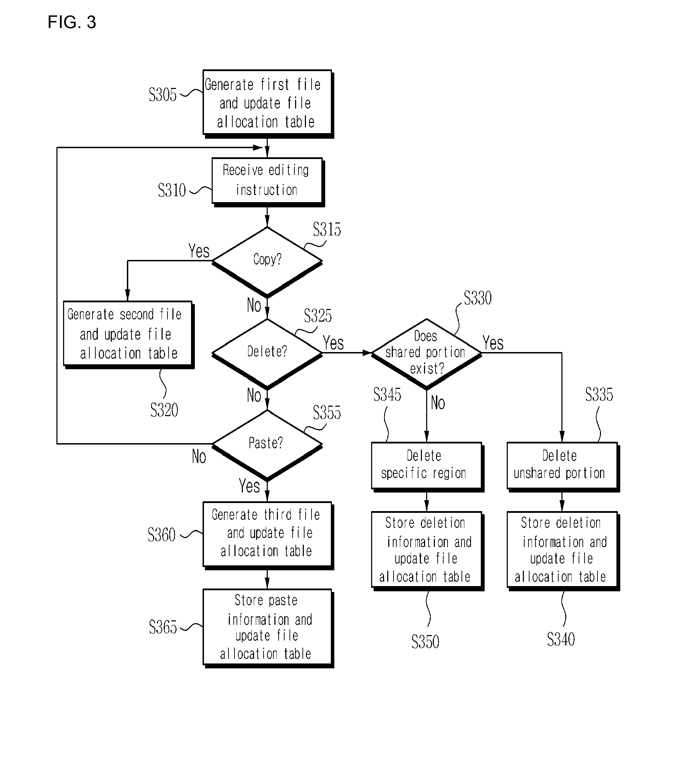

FIG. 3 is a flow chart of a method for editing digital moving picture files in the set-top box 100 according to a preferred embodiment of the present invention.

Referring to FIG. 3, when the set-top box 100 receives digital moving picture data from the contents server 110, the set-top box 100 splits the digital moving picture data into predetermined data units and stores the digital moving picture data in the database 230. The set-top box 100 generates a first file including address information of the stored data and unique ID information corresponding to the stored data. Here, the address information and the unique ID information can be stored in a file header region. That is, the first file does not include the actually stored data and has only the address information of the stored data. When the first file is executed, the digital moving picture data corresponding to the address information is reproduced with reference to the address information. Furthermore, information of the first file, such as the ID of the generated file, data unit information included in the first file and the unique ID information are updated in a file allocation table in operation S305.

Each data unit stores pointer information according to a moving picture playback sequence, and the pointer information can be stored in the header or the tail of each data unit. The length of the data unit can correspond to a predetermined data value or a predetermined number of moving picture frames.

The file allocation table is used for the controller 220 to manage files and stored in the database 230. The file allocation table includes a file ID, unique ID and data unit information corresponding to each file.

When the set-top box 100 receives an editing instruction for data of a specific region of the first file generated in operation S305, the set-top box 100 judges the contents of the editing instruction in operation S310. Here, when the received editing instruction is judged to be a 'copy' instruction (that is, 'yes' in operation S315), the set-top box 100 generates a second file that includes information on the start address and the end address of the specific region and the unique ID information in the file header thereof. Then, information on the second file, the data unit information corresponding to the specific region, and the unique ID information of the first file are updated in the file allocation table in operation S320.

The data unit information updated in operation S320 is data unit information corresponding to the address information included in the file header of the second file. Unique ID identical to the unique ID included in the file header of the first file is updated as the ID of the second file in the file allocation table to notify the controller 220 that the first file and the second file share data.

That is, the controller 220 searches the file allocation table stored in the database 230 for file editing and, when there are files having the same ID, such as the first file and the second file, knows that the first and the second file share data.

When the received editing instruction is judged to be a 'delete' instruction (that is, 'yes' in operation S325), files having the same ID as the ID of the first file are searched in the file allocation table and information on a shared region of the searched files is extracted to determine whether the data corresponding to the specific region has a portion shared with other files in operation S330.

Here, unique ID information is stored in the file allocation table when a file is generated in order to limit files to be judged to share to-be-deleted data to files having the same ID when a specific data unit is deleted from one of a plurality of files. Accordingly, a time required to search a shared data unit can be reduced and information on a shared region can be extracted to prevent data included in the shared data unit from being actually deleted. As a result, when another file that includes the address information of the corresponding data unit in the file header is executed, the data corresponding to the specific data unit can be reproduced.

When the data of the specific region has the shared portion in operation S330 (that is, 'yes' in operation S330), data of an unshared data unit in the specific region is deleted in operation S335, information according to the deletion of the specific region is stored in the first file such that the undeleted portion of the data of the specific region is not reproduced when the first file is executed, and the information according to the deletion is updated in the file allocation table in operation S340.

The information according to the deletion, stored in the first file in operation S340, can be pointer information according to data deletion, for example. That is, pointer information of the data unit prior to the deleted portion can be changed and stored in the header or the tail of each data unit such that the pointer of the data unit prior to the deleted portion indicates a data unit following the deleted portion. Furthermore, the data unit information included in the first file can be corrected to update the information according to the deletion in the file allocation database in operation S340.

When the data of the specific region does not have the shared portion in operation S330 (that is, 'no' in operation S330), the whole data of the specific region is deleted in the aforementioned manner in operation S345, and then the information according to the deletion is stored in the first file and the file allocation table is updated in operation S350.

When the editing instruction received in operation S310 is judged to be a 'paste' instruction (that is, 'yes' in operation S355), a third file that includes the address information of the specific region and the unique ID information in the file header thereof and information on the generated third file is stored in the file allocation table to update the file allocation table in operation S360.

Furthermore, information according to paste is stored in the first file to update the file allocation table in operation S365. Here, the process of storing the information according to paste in the first file is identical to operation S340 and 350 and the process of updating the file allocation table is identical to operation S320 so that explanations of the processes are omitted.

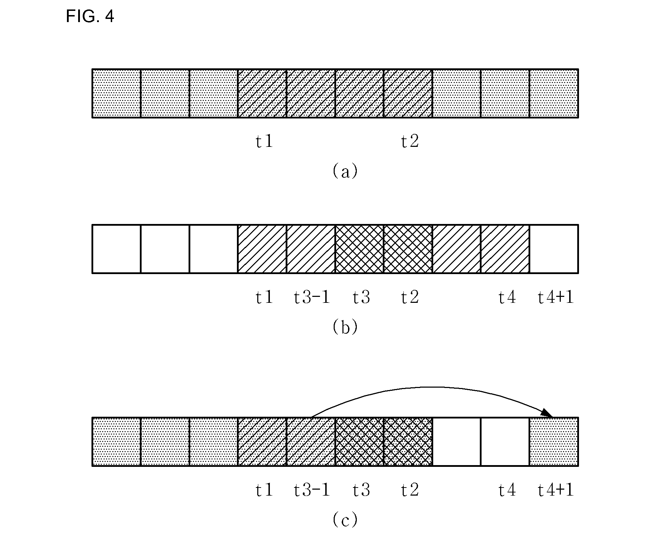

A method for editing digital moving picture data according to an editing instruction is explained with reference to FIG. 4. FIG. 4 illustrates a data editing method used in the present invention. In FIG. 4, ten blocks represent data units of stored digital moving picture data.

Referring to FIG. 4(a), when the set-top box 100 receives digital moving picture data from the contents server 110 and stores the received digital moving picture data in the database 230, a first file is generated. The first file does not include the stored data and stores the address information of the stored data and unique ID information corresponding to the data of the first file in the file header thereof. The data corresponding to the address information is reproduced when the first file is executed. When the first file is generated, the information of the first file, corresponding unique ID information and unit information of the stored data are updated in the file allocation table in the database 230.

If data corresponding to storage addresses 't1' to 't2' is copied, a second file that includes information on the start address 't1' and the end address 't2' in the file header thereof is generated. Both the file headers of the first file and the second file include address information including 't1' to 't2', and thus it can be known that the first file and the second file share the data stored in the unit corresponding to the addresses 't1' to 't2'. Accordingly, the unique ID information of the first file is stored in the file header of the second file and information of the second file, data unit information and unique ID information are updated in the file allocation table.

FIG. 4(b) illustrates an example of pasting data corresponding to storage addresses 't3' through 't4' in the first file. As described above with reference to FIG. 4(a), data of the units corresponding to the storage addresses 't3' through 't4' included in the first file is pasted while the data units corresponding to the storage addresses 't1' through 't2' are shared by the first file and the second file, a third file that includes address information of the data units corresponding to the storage addresses 't3' through 't4' in the file header thereof is generated. The file header of the third file stores the unique ID information of the first file and information of the generated third file is updated in the file allocation table.

Here, the file allocation table is searched for the information of the first file to correct data unit information corresponding to the storage addresses 't3' through 't4'. Furthermore, pointer information of the data unit corresponding to a storage address 't3-1' is changed and stored such that the pointer of the data unit corresponding to the storage address 't3-1' indicates the data unit corresponding to a storage address 't4+1' in order to prevent the data units corresponding to the storage addresses 't3' through 't4' from being reproduced when the first file is executed.

FIG. 4(c) illustrates an example of deleting the third file having the storage addresses 't3' through 't4'. As described above with reference to FIG. 4(b), when the third file including the information of the storage addresses 't3' through 't4' in the file header thereof is deleted while the second file and the third file share the data units corresponding to the storage addresses 't3' and 't2', the file allocation table is searched for a file having the same ID as the ID of the third file and data unit information included in the searched file is referred.

Data stored in the data units corresponding to the storage addresses 't4-1' and 't4' is deleted because the data units corresponding to the storage addresses 't4-1' and 't4' are not shared with other files, and data stored in the data units corresponding to the storage addresses 't3' and 't2' is not deleted because the data units corresponding to the storage addresses 't3' and 't2' are shared with the second file.

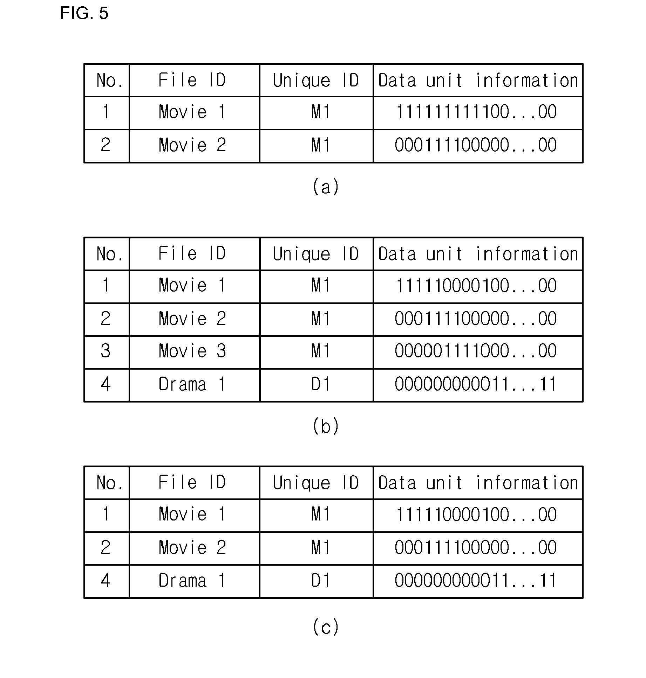

A method for updating a file allocation table is explained with reference to FIG. 5. In FIG. 5, columns of file allocation tables of FIGS. 5(a), 5(b) and 5(c) include items representing a number, a file ID, a unique ID and data unit information.

The file ID represents identifier information of files stored in the database 230. The unique ID represents the original file of edited data of a corresponding file. If data signals have the same original file, the data signals have the same unique ID. The data unit information represents data units included in each file or data units having address information of each file.

The file allocation tables include data unit information that represents a data unit included in a corresponding file as a bit '1' and represents a data unit that is not included in the corresponding file as a bit '0'.

Referring to FIG. 5(a), the file ID of a first row (No. 1) is 'Movie 1', unique ID of data included in the corresponding file is 'M1', and data unit information of the corresponding file is '111111111100...00', and thus it can be known that data included in first through tenth data units is the data of the corresponding file.

In a second row (No.2), the file ID is 'Movie 2', the unique ID is 'M1' which is identical to that of the file 'Movie 1', and thus it can be known that a file 'Movie 2' shares a specific data unit with the file 'Movie 1'. The file 'Movie 2' shares fourth, fifth, sixth and seventh data units with the file 'Movie 1' because the data unit information of the second row is set to '000111100000...00'.

Referring to FIG. 5(b), bits of sixth, seventh, eighth and ninth data units of the file 'Movie 1' are set to '0' and bits of corresponding data units in a third row (No.3) are set to '1'. In addition, the unique ID of a file 'Movie 3' of the third row (No.3) is set to 'M1' which is identical to the unique ID of the file 'Movie 1', and thus it can be known that the corresponding data units are pasted from the file 'Movie 1' to generate the file 'Movie 3'.

In a fourth row (No.4), the file ID is 'Drama 1', the unique ID is 'D1' and a bit value '1' of the data unit information is different from the corresponding bit value of the file 'Movie 1', 'Movie 2' or 'Movie 3'. Accordingly, it can be known that a file 'Drama 1' does not share data with the file 'Movie 1', 'Movie 2' or 'Movie 3'.

Referring to FIG. 5(c), the third row (No.3) storing the information on the file 'Movie 3' is deleted, and thus it can be known that the file 'Movie 3' is deleted. When the file 'Movie 3' is deleted, the controller 220 of the set-top box 100 searches the database 230 for files having the same ID as the ID 'M1' of the file 'Movie 3'. The searched files correspond to the files 'Movie 1' and 'Movie 2'.

Here, a logic OR operation is performed on the bit values of the data units of the files 'Movie 1' and 'Movie 2', for example. The data unit information bits value of the file 'Movie 1' corresponds to '111110000100...00' and the data unit information bit value of the file 'Movie 2' corresponds to '000111100000...00', and thus the result of the logic OR operation is '111111100100...00'. Furthermore, the sixth, seventh, eighth and ninth data units of the file 'Movie 3' have a bit value '1' and the bit values of the corresponding data units in the logic OR operation result are '1100', and thus, when a logic AND operation is performed on the bit values of the sixth, seventh, eighth and ninth data units of the file 'Movie 3' and the bit values '1100', the result of the logic AND operation becomes '1100'. Data corresponding to data units having a bit value '1' obtained from the two-time logic operations is not deleted and data corresponding to data units having a bit value '0' obtained from the two-time logic operations is deleted so as to prevent data shared with the files 'Movie 1' and 'Movie 2' from being deleted.

Accordingly, when a set-top box edits a moving picture corresponding to digital moving picture data stored therein, it is possible to prevent a storage space required to copy data to a hard disk from being wasted and decrease the waste of an editing time delayed according to data copy and deletion.

The present invention can be used for and applied to fields relating to a set-top box that edits stream files at the request of a user in a PVR and a method for editing digital moving picture files in the set-top box.

Provided is a method for editing digital moving picture files in a set-top box. The set-top box receives a digital moving picture file from a contents server, splits it into predetermined data units, and stores it in database. To edit the file, the set-top box selects a specific region of the file stored in the database, and generates a new file having only region information (start address and end address) of the selected specific region in the file. When the generated new file is accessed, in the case of copy, only a region corresponding to the region information is copied, and, in the case of paste and deletion, the region information is not accessed according to information recorded in the file header of the new file. The edit using address information (file ID) on an editing region in the original file can reduce an editing time.

## Claims

1. A method for editing digital moving picture files in a set-top box, comprising the steps of:
(a) splitting a digital moving picture file received from a contents server into predetermined data units in the set-top box and storing the digital moving picture file in a database;
(b) selecting a specific region of the file stored in the database in order to edit the file;
(c) generating a new file having only region information (start address and end address) of the specific region selected from the file in the file; and
(d) when the generated new file is accessed, only a region corresponding to the region information is copied in the case of copy and the region information is not accessed according to information recorded in a file header in the case of paste and deletion.

2. The method according to claim 1, wherein, when the new file is accessed according to a copy instruction in the step (d), the specific region is recognized with the start address of the specific region and only the selected specific region is copied.

3. The method according to claim 1, wherein, when the new file is accessed according to a paste instruction in the step (d), the specific region is recognized with the start address of the specific region and only the specific region is pasted.

4. The method according to claim 1, wherein, when the new file is accessed according to a deleting instruction in the step (d), the specific region is recognized with the start address of the specific region and only the specific region is deleted.

5. The method according to claim 1, wherein a next access point is recorded in the file header such that the pasted region or deleted region is not accessed.
